(19) Europäisches Patentamt / European Patent Office / Office européen des brevets

(11) EP 2 217 452 B1

(12) # EUROPEAN PATENT SPECIFICATION

(45) Date of publication and mention of the grant of the patent:
**20.04.2011 Bulletin 2011/16**

(21) Application number: **07857256.7**

(22) Date of filing: **05.12.2007**

(51) Int Cl.:
***B60C 1/00*** $^{(2006.01)}$ ***C08K 5/28*** $^{(2006.01)}$
***C08L 9/00*** $^{(2006.01)}$

(86) International application number:
**PCT/EP2007/063342**

(87) International publication number:
**WO 2009/071122 (11.06.2009 Gazette 2009/24)**

(54) **TIRE AND CROSSLINKABLE ELASTOMERIC COMPOSITION COMPRISING DIAZIDE CROSSLINKING AGENTS**

REIFEN UND VERNETZBARE ELASTOMERZUSAMMENSETZUNGEN MIT DIAZIDVERNETZUNGSMITTELN

PNEUMATIQUE ET COMPOSITION ÉLASTOMÈRE RÉTICULABLE COMPRENANT DES AGENTS DE RÉTICULATION DIAZIDES

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**18.08.2010 Bulletin 2010/33**

(73) Proprietors:
- **Pirelli Tyre S.P.A.**
  **20126 Milan (IT)**
- **Politecnico di Milano**
  **20133 Milano (IT)**

(72) Inventors:
- **GALIMBERTI, Maurizio**
  **I-20126 Milano (IT)**
- **LAMPIGNANO, Giuditta**
  **I-70028 Sannicandro di Bari (IT)**
- **CITTERIO, Attilio**
  **I-20131 Milano (IT)**
- **MOTTA, Ombretta**
  **I-80131 Napoli (IT)**

(74) Representative: **Allaix, Roberto et al**
**Marchi & Partners Srl**
**Via Pirelli 19**
**20124 Milano (IT)**

(56) References cited:
**EP-A- 0 344 380** **EP-A- 1 770 119**
**US-A1- 2004 166 317**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 217 452 B1

## Description

### Field of the invention

The present invention generally relates to a tire and to a crosslinkable elastomeric composition comprising diazide crosslinking agents.

More in particular, the present invention relates to a tire including at least one structural element obtained by crosslinking a crosslinkable elastomeric composition comprising diazide crosslinking agents having a specific general formula.

Moreover, the present invention also relates to a crosslinkable elastomeric composition comprising diazide crosslinking agents, as well as to a crosslinked manufactured article obtained by crosslinking said crosslinkable elastomeric composition.

### Background of the invention

In the rubber industry, in particular that of tires manufacturing, it is known practice to use a crosslinking system with the crosslinkable elastomeric compositions to improve the mechanical properties of the finished products (i.e. the crosslinked manufactured products).

The main crosslinking agent employed in the tire industry is sulfur. In spite of the number of advantages provided by sulfur, the use of sulfur still provides some disadvantages.

For example, it is known that the use of a large amount of sulfur may cause a worsening in the mechanical properties of the finished products (i.e. the crosslinked manufactured products). In fact, to achieve good mechanical properties of the crosslinked manufactured products, sulfur has to be homogeneously distributed in the elastomeric compositions, and this may be difficult, in particular, when a large amount of sulfur is used and, more in particular, when insoluble sulfur is used.

Moreover, it is also known that the use of a large amount of sulfur may cause remarkable reversion phenomena, which result in modification of the tire performances during use. Essentially, the reversion consists of a partial breaking of the sulfur-based crosslinks between the polymer chains of the elastomeric compositions, which may be attributed substantially to the high temperature that are reached during vulcanization operations and/or when the tire is in use.

Therefore, crosslinking systems comprising vulcanization accelerators, such as amines, thiazoles, sulphenamides, dithiocarbamates, thiuram, or mixtures thereof, for improving the crosslinking process have been widely developed. Moreover, crosslinking agents alternative to sulfur have been studied and tested.

For example, United States Patent US 3,261,818 relates to a process for crosslinking a hydrocarbon polymer which comprises treating said polymer with an aromatic polyazides having the formula $R(N_3)_x$ where R is an aromatic group inert to the crosslinking reaction and x is an integer higher than 1 in the presence of a non-protonating Lewis acid at a temperature below about 75°C, most preferably from about 0°C to about 50°C. The abovementioned process is said to be useful to prepare hydrocarbon polymer films and coatings.

Great Britain Patent GB 1,009,771 relates to a process for crosslinking a polymer selected from the group consisting of hydrocarbon polymers, cellulose esters, cellulose ethers, poly(vinyl acetate), polychloroprene, poly(vinyl chloride), vinylidene fluoride-hexafluoropropylene copolymer, butadiene-acrylonitrile copolymer, propylenene oxide-unsaturated glycidyl ether copolymer, poly[3,3-bis(chloromethyl)oxetane], vinylidene chloride-acrylonitrile copolymer, poly (chlorotrifluoroethylene) and polyepihalohydrin, which comprises heating said polymer in the presence of an aromatic polyazide having the formula $R(N_3)_x$ where R is an aromatic group inert to the crosslinking reaction and x is an integer higher than 1. The crosslinking process is carried out by heating the polymer plus the aromatic polyazide above the decomposition temnperature of the latter, in general at a temperature of from 100°C to 300°C. The abovementioned process is said to give a crosslinked polymer tough, resilient, solvent-resistant and odor-free.

German Patent DE 2,165,198 relates to the preparation of silica and carbon black reinforced vulcanizates having improved abrasion resistance by crosslinking elastomeric polymers with alkyl, cycloalkyl, alkaryl, aralkyl and aryl bis(azidoformate).

Additionally, the use of tetramethylene bis(azidoformate) for the vulcanization of elastomeric polymers is also disclosed by D.S. Breslow, "Azides and Nitrenes", Chapter 10, Industrial Applications, II. Rubber Vulcanization, pp. 499-501, Academic Press Inc., New York (1984).

The use of benzene 1,3-sulphonyl azide for crosslinking elastomers (like NR, BR, SBR, and CR) is disclosed by J.L. de Benito-Gonzalez et al, "The Use of Benzene 1,3-Sulphonyl Azide as an Elastomer Crosslinking Agent", Part 1. Dienic Elastomers, Kautschuk + Gummi, Kunstsoffe 43, Jahrgang, Nr. 2/90, pp. 146-149, (1990).

## Summary of the invention

However, the Applicant has noticed that none of the above mentioned references provide a solution to the reversion phenomena and in spite of the efforts and improvements known in the art, there is still the need of providing crosslinked elastomeric compositions having reduced reversion phenomena.
The Applicant has faced the problem of reducing the reversion phenomena without negatively affecting or even improving the mechanical properties of the resulting crosslinked manufactured products, in particular of the resulting tires.
The Applicant has found that the above mentioned problem may be overcome by adding to the crosslinkable elastomeric compositions which may be advantageously used in the production of crosslinked manufactured products, in particular in the manufacturing of tires, a diazide crosslinking agent having a given general formula which will be better specified hereinbelow.
In particular, the Applicant has found that the addition of said diazide crosslinking agent allows to obtain crosslinked manufactured products showing substantially unaltered or even improved mechanical properties (both static and dynamic).
Moreover, the Applicant has found that the addition of said diazide crosslinking agent allows to reduce the reversion phenomena, in particular in the presence of diene elastomers comprising 1,4-diene units such as, for example, cis-1,4-polyisoprene (natural or synthetic, preferably natural rubber), cis-1,4-polybutadiene, or mixtures thereof.
Furthermore, the Applicant has found that the addition of said diazide crosslinking agent allows to reduce the amount of crosslinking accelerators usually added to the crosslinkable elastomeric compositions. Moreover, the Applicant has also found that the addition of said diazide crosslinking agent allows to reduce or even to eliminate the amount of sulfur or derivatives thereof usually added to the the crosslinkable elastomeric compositions.
Accordingly, the present invention relates to a tire comprising at least one structural element including a crosslinked elastomeric material obtained by crosslinking a crosslinkable elastomeric composition comprising:

(a) 100 phr of at least one elastomeric polymer;
(b) from about 0.1 phr to about 120 phr, preferably from about 20 phr to about 90 phr, of at least one reinforcing filler;
(c) from about 0.05 phr to about 10 phr, preferably from about 0.1 phr to about 5 phr, of at least one crosslinking agent selected from the group comprising diazides having the following general formula (I):

$$N_3\text{-}A\text{-}R\text{-}B\text{-}N_3 \qquad (I)$$

wherein:

- A and B, which may be equal or different from each other, are selected from the group comprising: a substituted or unsubstituted methylene group, a substituted or unsubstituted benzyl group, or a substituted or unsubstituted benzylidene group;
- R may be a linear, branched, or cyclic alkylene group comprising from 1 to 20 carbon atoms, said alkylene group optionally comprising one or more heteroatoms which may be selected, for example, from S, N, or O.

According to one preferred embodiment, said tire comprises:

- a carcass structure of a substantially toroidal shape, having opposite lateral edges associated with respective right-hand and left-hand bead structures;
- a belt structure applied in a radially external position with respect to said carcass structure;
- a tread band applied in a radially external position with respect to said belt structure;
- a tread underlayer applied in a radially internal position with respect to said tread band;
- a pair of sidewalls applied laterally on opposite sides with respect to said carcass structure;

wherein said structural element is said tread underlayer.
Preferably, said bead structures are defined by respective carcass turn-up and comprise at least one bead core and at least one bead filler, said bead filler being said structural element.
Preferably, said tire may further comprise:

- a pair of sidewall inserts extending radially between each of said bead structures and the corresponding lateral edge of said tread band; and optionally,
- a pair of antiabrasive layers placed in an axially external position with respect to said carcass turn-up;

wherein said structural element is at least one of said pair of sidewall inserts, or said pair of antiabrasive layers.

For the purposes of the present description and of the claims which follow the term "phr" means the parts by weight of a given component of the crosslinkable elastomeric composition per 100 parts by weight of the elastomeric polymer(s).

The present invention, in at least one of the abovementioned aspects, may show one or more of the preferred characteristics hereinafter described.

When A and B represent a "methylene group", said "methylene group" is, preferably, a $-CH_2-$ group wherein one or both hydrogen atoms may be substituted by a conventional organic substituent comprising O, N, or S, such as, for example, -OH, -SH, $-NH_2$, $-NHCH_3$, $-SO_3H$ and the like.

When A and B represent a "benzyl group", said "benzyl group" is, preferably, represented by the following formula:

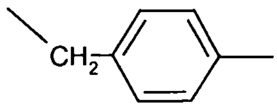

wherein one or more hydrogen atoms may be substituted by a conventional organic substituent comprising O, N, or S, such as, for example, -OH, -SH, $-NH_2$, $-NHCH_3$, $-SO_3H$ and the like; the $-CH_2-$ group is linked to the R group and the carbon atom at position 4 of the phenyl ring is linked to the azido group.

When A and B represent a "benzylidene group", said "benzylidene group" is, preferably, represented by the following formula:

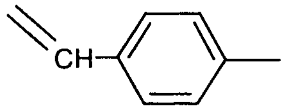

wherein one or more hydrogen atoms may be substituted by a conventional organic substituent comprising O, N, or S, such as, for example, -OH, -SH, $-NH_2$, $-NHCH_3$, $-SO_3H$ and the like; the $-CH_2-$ group is linked to the R group and the carbon atom at position 4 of the phenyl ring is linked to the azido group.

In the above reported chemical formulas given for A and B groups, the single (-) or double (=) line intends to represent a single or double bond connecting the group A or B to the R group from one side and to the azido group from the other side, according to the general formula (I) above reported.

According to a preferred embodiment of the present invention, in the general formula (I) above reported, the R group may be a linear, branched, or cyclic alkylene group comprising from 1 to 10 carbon atoms, said alkylene group optionally comprising one or more heteroatoms which may be selected, for example, from S, N, or O.

Specific examples of linear alkylene groups represented by R are the following:

$-CH_2-CH_2-$;

$-CH_2-CH_2-CH_2-$;

$-CH_2-CH_2-CH_2-CH_2-$;

$-CH_2-CH_2-CH_2-CH_2-CH_2-$;

$-CH_2-CH_2-CH_2-CH_2-CH_2-CH_2-$;

$-CH_2-CH_2-O-$;

$=CH-CH=$;

$=CH-CH_2-CH=$;

$=CH-CH_2-CH_2-CH_=$;

$-CH_2-CH_2-O-CH_2-CH_2-$;

$-CH_2-CH_2-S-CH_2-CH_2-$;

$-CH_2-CH_2-NH-CH_2-CH_2-$;

$=CH-CH_2-CH_2-CH_2-CH=$;

$=CH-CH_2-CH_2-CH_2-CH_2-CH=$.

Specific examples of branched alkylene groups represented by R are the following:

$-(CH_3)_2C^=$;

$-CH_3(C_2H_5)C^=$;

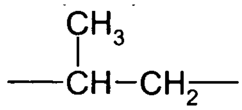
;

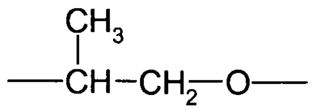
;

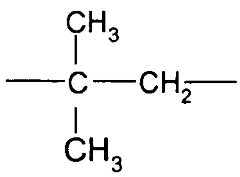
;

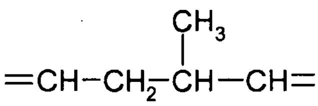
;

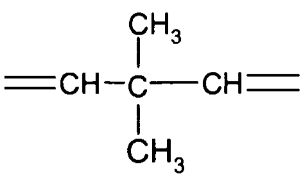
;

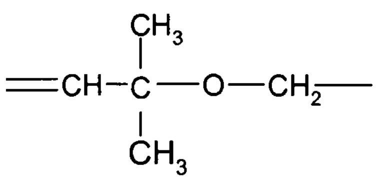
;

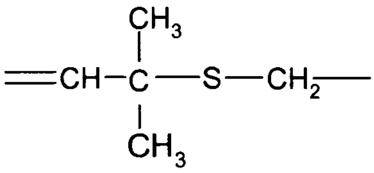
;

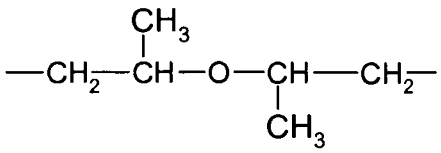
;

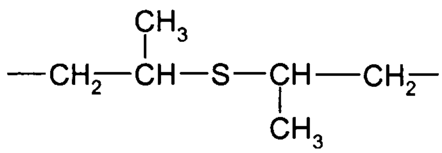
;

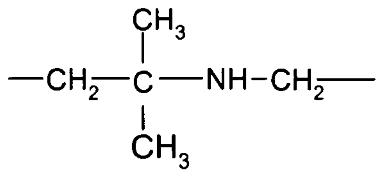
;

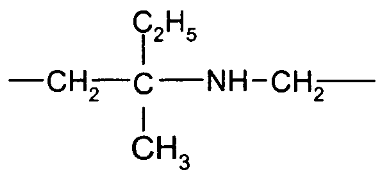
.

Specific examples of cyclic alkylene groups represented by R are the following:

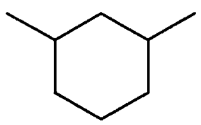
;

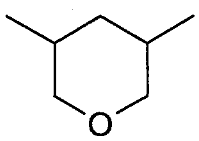
;

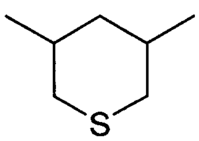
;

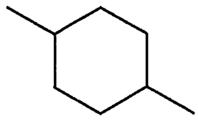 ;

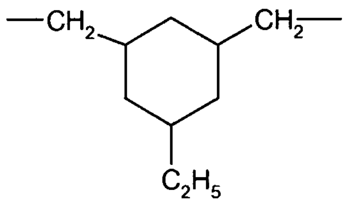 ;

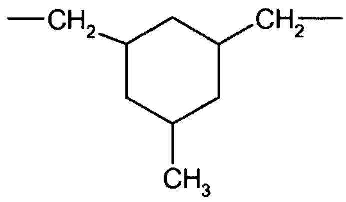 ;

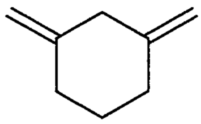 ;

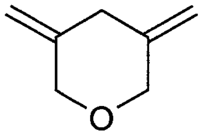 ;

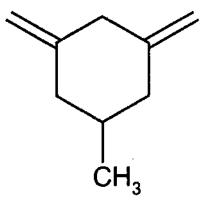 ;

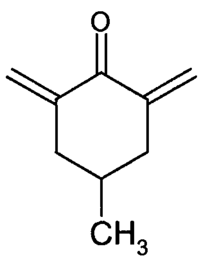 ;

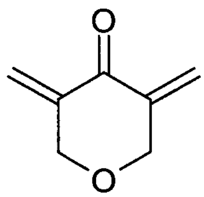

;

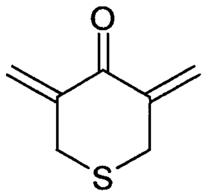

.

In the above reported examples of R groups, the single (-) or double (=) line intends to represent a single or double bond connecting the R group with the methylene group, or the benzyl group, or the benzylidene group given for A and B groups according to the general formula (I) above reported.

Specific examples of diazide crosslinking agents useful in the present invention are: 1,12-diazidododecane, 1,16-diazidohexadecane, 1,18-diazidooctadecane, 1,3-bis(4-butylazide)cyclohexane, 1,4-bis(3-propylazider cyclohexane, 2,6-bis(4-azidobenzylidene)-4-methylcyclohexanone, 2,6-bis(4-azidobenzylidene)-4-cyclohexanone, 1,4-bis(4-azidobenzylidene)-cyclohexane, or mixtures thereof. 1,12-Diazidododecane, 2,6-bis(4-azidobenzylidene)-4-methylcyclohexanone, or mixtures thereof, are preferred.

As reported above, the diazide crosslinking agent is employed in the crosslinkable elastomeric composition of the present inventon in an amount of from about 0.05 phr to about 10 phr, preferably from about 0.1 phr to about 5 phr. More preferably, the diazide crosslinking agent is employed in an amount of from about 0.2 phr to about 2 phr.

The diazide crosslinking agent useful in the present invention may be used alone or in mixture with sulfur-based vulcanizing systems commonly used in crosslinkable elastomeric compositions, said sulfur-based vulcanizing systems usually comprising: sulfur or derivatives thereof, at least one vulcanization activator, at least one vulcanization accelerator, or mixtures thereof.

According to one preferred embodiment, the crosslinkable elastomeric composition of the present invention, further comprises sulfur or derivatives thereof.

Said sulfur or derivatives thereof may be selected, for example, from:

- soluble sulfur (crystalline sulfur);
- insoluble sulfur (polymeric sulfur);
- sulfur dispersed in oil (for example 33% sulfur known under the trade name Crystex® OT33 from Flexsys);
- sulfur donors such as, for example, tetramethylthiuram disulphide (TMTD), tetrabenzylthiuram disulphide (TBzTD), tetraethylthiuram disulphide (TETD), tetrabutylthiuram disulphide (TBTD), dimethyldiphenylthiuram disulphide (MPTD), pentamethylenethiuram tetrasulphide or hexasulphide (DPTT), morpholinobenzothiazole disulphide (MBSS), N-oxydiethylenedithiocarbamyl-N'-oxydiethylenesulphenamide (OTOS), dithiodimorpholine (DTM or DTDM), caprolactam disulphide (CLD); or mixtures thereof;

or mixtures thereof.

Said sulfur or derivatives thereof are preferably employed in the crosslinkable elastomeric composition of the present invention in an amount of from about 0.05 phr to about 10 phr, more preferably from about 0.1 phr to about 5 phr, and even more preferably from about 0.2 phr to about 2 phr.

According to a further prefered embodiment, the crosslinkable elastomeric composition of the present invention, further comprises at least one vulcanization activator.

Vulcanization activators that are particularly effective are zinc compounds, and in particular ZnO, $ZnCO_3$ zinc salts of saturated or unsaturated fatty acids containing from 8 to 18 carbon atoms, such as, for example, zinc stearate, which are preferably formed in situ in the elastomeric composition from ZnO and fatty acid, and also BiO, PbO, $Pb_3O_4$ $PbO_2$, or mixtures thereof.

Said vulcanization activators are preferably employed in the crosslinkable elastomeric composition of the

present invention in an amount of from about 0.5 phr to about 10 phr, more preferably of from 1 phr to 5 phr, and even more preferably of from 1.5 phr to 3.5 phr.

According to a further preferred embodiment, the crosslinkable elastomeric composition of the present invention, further comprises at least one vulcanization accelerator.

Vulcanization accelerators that are commonly used may be selected, for example, from: dithiocarbamates, guanidine, thiourea, thiazoles, sulfenamides, thiurams, amines, xanthates, or mixtures thereof.

Said vulcanization accelerators are preferably employed in the crosslinkable elastomeric composition of the present invention in an amount of from about 0.05 phr to about 10 phr, more preferably from about 0.1 phr to about 5 phr, and even more preferably from about 0.5 phr to about 3 phr.

The crosslinkable elastomeric compositions above reported may be vulcanized according to known techniques. To this end, in the crosslinkable elastomeric composition, after one or more steps of thermomechanical processing, diazide crosslinking agent(s), and, optionally, a sulfur-based vulcanizing system, namely, sulfur or derivatives thereof, vulcanization activator(s), vulcanization accelerator(s), or the other component(s) of said sulfur-based vulcanizing system, are incorporated. In the final processing step, the temperature is generally kept below about 120°C and preferably to about 100°C, so as to avoid any unwanted pre-crosslinking phenomena.

According to one preferred embodiment, said at least one elastomeric polymer (a) may be selected, for example, from ($a_1$) diene elastomeric polymers which are commonly used in sulfur-crosslinkable elastomeric compositions, that are particularly suitable for producing tires, that is to say from elastomeric polymers or copolymers with an unsaturated chain having a glass transition temperature (Tg) generally below 20°C, preferably in the range of from about 0°C to -110°C. These polymers or copolymers may be of natural origin or may be obtained by solution polymerization, emulsion polymerization or gas-phase polymerization of one or more conjugated diolefins, optionally blended with at least one comonomer selected from monovinylarenes and/or polar comonomers. Preferably, the obtained polymers or copolymers contain said at least one comonomer selected from monovinylarenes and/or polar comonomers in an amount of not more than 60% by weight.

The conjugated diolefins generally contain from 4 to 12, preferably from 4 to 8 carbon atoms, and may be selected, for example, from: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene, or mixtures thereof. 1,3-butadiene, or isoprene, are particularly preferred.

Monovinylarenes which may optionally be used as comonomers generally contain from 8 to 20, preferably from 8 to 12 carbon atoms, and may be selected, for example, from: styrene; 1-vinylnaphthalene; 2-vinylnaphthalene; various alkyl, cycloalkyl, aryl, alkylaryl or arylalkyl derivatives of styrene such as, for example, α-methylstyrene, 3-methylstyrene, 4-propylstyrene, 4-cyclohexylstyrene, 4-dodecylstyrene, 2-ethyl-4-benzylstyrene, 4-p-tolylstyrene, 4-(4-phenylbutyl)styrene, or mixtures thereof. Styrene is particularly preferred. Polar comonomers which may optionally be used may be selected, for example, from: vinylpyridine, vinylquinoline, acrylic acid and alkylacrylic acid esters, nitriles, or mixtures thereof, such as, for example, methyl acrylate, ethyl acrylate, methyl methacrylate, ethyl methacrylate, acrylonitrile, or mixtures thereof.

Preferably, said diene elastomeric polymer ($a_1$) may be selected, for example, from: cis-1;4-polyisoprene (natural or synthetic, preferably natural rubber), 3,4-polyisoprene, polybutadiene (in particular, polybutadiene with a high 1,4-cis content), optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof. Cis-1,4-polyisoprene (natural or synthetic, preferably natural rubber), 3,4-polyisoprene, polybutadiene (in particular, polybutadiene with a high 1,4-cis content), optionally halogenated isoprene/isobutene copolymers, 1,3-butadiene/acrylonitrile copolymers, or mixtures thereof, are particularly preferred.

Alternatively, said at least one elastomeric polymer (a) may be selected, for example, from ($a_2$) elastomeric polymers of one or more monoolefins with an olefinic comonomer or derivatives thereof. The monoolefins may be selected, for example, from: ethylene and α-olefins generally containing from 3 to 12 carbon atoms, such as, for example, propylene, 1-butene, 1-pentene, 1-hexene, 1-octene, or mixtures thereof. The following are preferred: copolymers between ethylene and an α-olefin, optionally with a diene; isobutene homopolymers or copolymers thereof with small amounts of a diene, which are optionally at least partially halogenated. The diene optionally present generally contains from 4 to 20 carbon atoms and is preferably selected from: 1,3-butadiene, isoprene, 1,4-hexadiene, 1,4-cyclohexadiene, 5-ethylidene-2-norbornene, 5-methylene-2-norbornene, vinylnorbornene, or mixtures thereof. Among these, the following are particularly preferred: ethylene/propylene copolymers (EPR) or ethylene/propylene/diene copolymers (EPDM); poly-isobutene; butyl rubbers; halobutyl rubbers, in particular chlorobutyl or bromobutyl rubbers; or mixtures thereof.

Mixtures of the abovementioned diene elastomeric polymers ($a_1$) with the abovementioned elastomeric polymers ($a_2$), may also be used.

The above reported elastomeric polymers (a) may optionally be functionalized by reaction with suitable terminating agents or coupling agents. In particular, the diene elastomeric polymers ($a_1$) obtained by anionic polymerization in the presence of an organometallic initiator (in particular an organolithium initiator) may be functionalized by reacting the residual organometallic groups derived from the initiator with suitable terminating agents or coupling agents such

as, for example, imines, carbodiimides, alkyltin halides, substituted benzophenones, alkoxysilanes or aryloxysilanes (see, for example, European Patent EP 451,604, or United States Patents US 4,742,124, or US 4,550,142).

The above reported elastomeric polymers (a) may optionally include at least one functional group which may be selected, for example, from: carboxylic groups, carboxylate groups, anhydride groups, ester groups, epoxy groups, or mixtures thereof.

According to the present invention, said at least one reinforcing filler (b) may be selected from those commonly used for crosslinked manufactured products, in particular for tires, such as, for example, carbon black, silica, alumina, aluminosilicates, calcium carbonate, kaolin, or mixtures thereof. Carbon black, silica, or mixtures thereof are preferred.

According to one preferred embodiment, said carbon black reinforcing filler may be selected, for example, from those having a surface area of not less than 20 $m^2/g$ (determined by CTAB absorption as described in Standard ISO 6810:1995).

According to one preferred embodiment, said silica reinforcing filler may be selected, for example, from: pyrogenic silica, precipitated amorphous silica, wet silica (hydrated silicic acid), dry silica (anhydrous silicic acid), fumed silica, calcium silicate, or mixtures thereof. Other suitable fillers include aluminum silicate, magnesium silicate, or mixtures thereof. Among these, precipitated amorphous wet-process, hydrated silicas are preferred. These silicas are so-called because they are produced by a chemical reaction in water, from which they are precipitated as ultrafine, spherical particles. These primary particles strongly associate into aggregates, which in turn combine less strongly into agglomerates. The BET surface area, as measured according to Standard ISO 5794-1:2005, gives the best measure of the reinforcing character of different silicas.

Silica reinforcing fillers which may be advantageously used according to the present invention, preferably have a BET surface area of from about 32 $m^2/g$ to about 400 $m^2/g$, more preferably of from about 100 $m^2/g$ to about 250 $m^2/g$, even more preferably of from about 150 $m^2/g$ to about 220 $m^2/g$. The pH of said silica reinforcing fillers is, generally, of from about 5.5 to about 7.0, preferably of from about 5.5 to about 6.8.

Examples of silica reinforcing fillers which may be used according to the present invention and are available commercially are the products known by the name of Hi-Sil® 190, Hi-Sil® 210, Hi-Sil® 215, Hi-Sil® 233, Hi-Sil® 243, from PPG Industries (Pittsburgh, Pa.); or the products known by the name of Ultrasil® VN2, Ultrasil® VN3 from Degussa; or the product known under the name of Zeosil® 1165MP from Rhodia.

When a reinforcing filler comprising silica is present, the crosslinkable elastomeric composition may advantageously incorporate a silane coupling agent capable of interacting with the silica and of linking it to the elastomeric polymer(s) during the vulcanization.

Coupling agents that are preferably used are those based on silane which may be identified, for example, by the following structural formula (II):

$$(R_2)_3Si\text{-}C_tH_{2t}\text{-}X \qquad (II)$$

wherein the groups $R_2$, which may be equal or different from each other, are selected from: alkyl, alkoxy or aryloxy groups or from halogen atoms, on condition that at least one of the groups $R_2$ is an alkoxy or aryloxy group; t is an integer between 1 and 6 inclusive; X is a group selected from: nitroso, mercapto, amino, epoxide, vinyl, imide, chloro, $-(S)_uC_tH_{2t}\text{-}Si\text{-}(R_2)_3$ or or $-S\text{-}COR_2$ in which u and t are integers of from 1 to 6 extremes included and the groups $R_2$ are defined as reported above.

Among the coupling agents that are particularly preferred are bis(3-triethoxysilylpropyl) tetrasulfide, bis(3-triethoxysilylpropyl) disulfide, or mixtures thereof. Said coupling agents may be used as such or as a suitable mixture with an inert filler (for example carbon black) so as to facilitate their incorporation into the crosslinkable elastomeric composition.

Said crosslinkable elastomeric composition may comprise other commonly used additives selected on the basis of the specific application for which the composition is intended. For example, the following additives may be added to said crosslinkable elastomeric composition: antioxidants, anti-ageing agents, plasticizers, adhesives, antiozonants (in particular of the p-phenylenediamine type), waxes, modifying resins, fibres (for example Kevlar® pulp), or mixtures thereof.

Usually, for the purpose of further improving its processability, a plasticizer generally selected from mineral oils, vegetable oils, synthetic oils, or mixtures thereof, such as, for example, aromatic oil, naphthenic oil, phthalates, soybean oil, or mixtures thereof, may be added to said crosslinkable elastomeric composition. The amount of plasticizer generally ranges of from about 0 phr to about 70 phr, preferably of from of 1 phr to 30 phr.

The above reported crosslinkable elastomeric composition may be prepared by mixing together the elastomeric polymer(s), the reinforcing filler (b) and the diazides (c) above reported, with the other additives optionally present, according to techniques known in the art. The mixing may be carried out, for example, using an open mixer of open-mill type, or an internal mixer of the type with tangential rotors (Banbury) or with interlocking rotors (Intermix), or in continuous mixers of Ko-Kneader type (Buss), or of co-rotating or counterrotating twin-screw or multi-screw type.

The process for producing the tire according to the present invention may be carried out according to techniques and using apparatus that are known in the art, said process including manufacturing a green tire, and subsequently moulding and vulcanizing the green tire.

## Brief description of the drawings

The present invention will now be illustrated in further detail by means of illustrative embodiments, with reference to the attached figures wherein:

- Fig. 1 is a view in cross-section of a portion of a tire made according to one embodiment of the present invention;
- Fig. 2 is a view in cross-section of a portion of a tire made according to a further embodiment of the present invention.

## Detailed description of the preferred embodiments

With reference to Fig. 1, "a" indicates an axial direction and "r" indicates a radial direction. For simplicity, Fig. 1 shows only a portion of the tire, the remaining portion not represented being identical and symmetrically arranged with respect to the radial direction "r".

The tire (100) comprises at least one carcass ply (101), the opposite lateral edges of which are associated with respective bead structures comprising at least one bead core (102) and at least one bead filler (104). Said bead filler (104) may comprise an elastomeric composition according to an aspect of the present invention. The association between the carcass ply (101) and the bead core (102) is achieved here by turning back the opposite lateral edges of the carcass ply (101) around the bead core (102) so as to form the so-called carcass turn-up (101 a) as shown in Fig. 1.

Alternatively, the conventional bead core (102) may be replaced with at least one annular insert formed from rubberized wires arranged in concentric coils (not represented in Fig. 1) (see, for example, European Patent Applications EP 928,680 or EP 928,702). In this case, the carcass ply (101) is not turned-up around said annular inserts, the coupling being provided by a second carcass ply (not represented in Fig. 1) applied externally over the first.

The carcass ply (101) usually comprises a plurality of reinforcing cords arranged parallel to each other and at least partially coated with a layer of a crosslinked elastomeric composition. These reinforcing cords are usually made of textile fibres, for example rayon, nylon or polyethylene terephthalate, or of steel wires stranded together, coated with a metal alloy (for example copper/zinc, zinc/manganese, zinc/molybdenum/cobalt alloys, and the like).

The carcass ply (101) is usually of radial type, i.e. it incorporates reinforcing cords arranged in a substantially perpendicular direction relative to a circumferential direction.

The core (102) is enclosed in a bead (103), defined along an inner circumferential edge of the tire (100), with which the tire engages on a rim (not represented in Fig. 1) forming part of a vehicle wheel. The space defined by each carcass turn-up (101 a) contains a bead filler (104).

An anti-abrasive layer (105), which may comprise an elastomeric composition according to an aspect of the present invention, is usually placed in an axially external position relative to the carcass turn-up (101 a).

A belt structure (106) is applied along the circumference of the carcass ply (101). In the particular embodiment of Fig. 1, the belt structure (106) comprises two belt strips (106a, 106b) which incorporate a plurality of reinforcing cords, typically metal cords, which are parallel to each other in each strip and intersecting with respect to the adjacent strip, oriented so as to form a predetermined angle relative to a circumferential direction. On the radially outermost belt strip (106b), at least one zero-degree reinforcing layer (106c) may optionally be applied, commonly known as a "0° belt", which generally incorporates a plurality of reinforcing cords, typically textile cords, arranged at an angle of a few degrees relative to a circumferential direction, usually coated with a crosslinked elastomeric composition.

A tread band (109), whose lateral edges are connected to the side walls (108), is applied circumferentially in a position radially external to the belt structure (106). Externally, the tread band (109) has a rolling surface (1 09a) designed to come into contact with the ground. Circumferential grooves which are connected by transverse notches (not represented in Fig. 1) so as to define a plurality of blocks of various shapes and sizes distributed over the rolling surface (109a) are generally made in this surface (109a), which is represented for simplicity in Fig. 1 as being smooth.

A sidewall (108) is also applied externally onto the carcass ply (101), this sidewall extending, in an axially external position, from the bead (103) to the end of the belt structure (106).

A tread underlayer (111), which may comprise an elastomeric composition according to an aspect of the present invention, may be placed between the belt structure (106) and the tread band (109). As represented in Fig. 1, the tread underlayer (111) may have uniform thickness. Alternatively, the tread underlayer (111) may have a variable thickness in the transversal direction. For example, the thickness may be greater near its outer edges than at a central zone. In Fig. 1, said tread underlayer (111) extends over a surface substantially corresponding to the surface of development of said belt structure (106). Alternatively, said tread underlayer (111) extends only along at least one portion of the development of said belt structure (106), for instance at opposite side portions of said belt structure (106) (not represented

in Fig. 1).

A strip made of elastomeric material (110), commonly known as a "mini-sidewall", may optionally be present in the connecting zone between the sidewalls (108) and the tread band (109), this mini-sidewall generally being obtained by co-extrusion with the tread band and allowing an improvement in the mechanical interaction between the tread band (109) and the side walls (108). Alternatively, the end portion of the side wall (108) directly covers the lateral edge of the tread band (109).

In the case of tubeless tires, a rubber layer (112) generally known as a liner, which provides the necessary impermeability to the inflation air of the tire, may also be provided in an inner position relative to the carcass ply (101).

Fig. 2 shows a tire (100) having a structure as described in Fig. 1 (the same reference numbers have the same meanings as disclosed in Fig. 1) further comprising a sidewall insert (113) which may comprise an elastomeric composition according to an aspect of the present invention. The sidewall insert (113) extends radially between the bead structure (103) and the lateral edge of the tread band (109). The sidewall insert (113) is placed in an axially internal or external position with respect to the carcass ply: for example, as represented in Fig. 2, the sidewall insert (113) is placed between the carcass ply (101) and the liner (112).

Alternatively, in the case more than one carcass ply is present, a sidewall insert (113) may be placed between two of said carcass plies (not represented in Fig. 2).

Alternatively, a sidewall insert (113) may be placed between the carcass ply and the sidewall (not represented in Fig. 2). More than one sidewall insert may be present as disclosed, for example, in United States Patent US 5,238,040, or in European Patent Application EP 943,466.

Said sidewall insert (113) is usually used in the case of extended mobility tires such as, for example, run flat tires.

Although the present invention has been illustrated specifically in relation to a tire, other crosslinked elastomeric manufactured products that may be produced according to the invention may be, for example, conveyor belts, drive belts, or hoses.

The present invention will be further illustrated below by means of a number of preparation examples, which are given for purely indicative purposes and without any limitation of this invention.

The samples of the following examples were evaluated according to the following tests and measurements.

The tensile modulus (100% Modulus and 300% Modulus), the tensile strength, as well as the stress at break, the elongation at break and the energy at break, were measured according to Standard ISO 37:2005, on samples of the elastomeric compositions described below crosslinked at 170°C, for 10 min.

The MDR rheometric analysis was carried out using a Monsanto MDR rheometer, the tests being carried out at 170°C, for 20 min, at an oscillation frequency of 1.66 Hz (100 oscillations per minute) and an oscillation amplitude of $\pm$ 0.5°.

The dynamic mechanical properties, were measured using an Instron dynamic device in the traction-compression mode according to the following methods. A test piece of the crosslinked elastomeric composition (crosslinked at 170°C, for 10 min) having a cylindrical form (length = 25 mm; diameter = 12 mm), compression-preloaded up to a 25% longitudinal deformation with respect to the initial length, and kept at the prefixed temperature (23°C, and 70°C) for the whole duration of the test, was submitted to a dynamic sinusoidal strain having an amplitude of $\pm$3.5% with respect to the length under pre-load, with a 100 Hz frequency. The dynamic mechanical properties are expressed in terms of dynamic elastic modulus (E') and Tan delta (loss factor) values. The Tan delta value is calculated as a ratio between viscous modulus (E") and elastic modulus (E').

The Payne effect ($\Delta$G') was measured using a Monsanto R.P.A. 2000 rheometer. For this purpose, cylindrical test specimens with weights in the range of from 4.5 g to 5.5 g were obtained by punching from the crosslinked elastomeric compositions (crosslinked at 170°C, for 30 min), and were subjected to the measurement of (G') at 70°C, frequency 10 Hz, deformation 3.2% and 10%.

The percentage of reversion was determined according to the following formula:

$$\text{reversion\%} = \frac{M_H - M_{final}}{M_H - M_L} \times 100$$

wherein:

- $M_H$ = maximum torque value;
- $M_{final}$ = final torque value;
- $M_L$ = minimum torque value.

EXAMPLE 1

Preparation of elastomeric compositions 1 to 5

The elastomeric compositions 1 to 5 given in Table 1 were prepared as follows (the amounts of the various components are given in phr).

All the components, except sulfur, diazide and accelerators (TBBS), were mixed together in an internal mixer (model Pomini PL 1.6) for about 5 min (1st Step). As soon as the temperature reached 145±5°C, the elastomeric composition was discharged. The sulfur, diazide and accelerators (TBBS), were then added and mixing was carried out in an internal mixer (model Thermo Haake Rheomix 3000p) for about 5 minutes at a maximum temperature of 100°C (2nd Step).

TABLE 1

| SAMPLE | 1 (*) | 2 (^) | 3 (^) | 4 (^) | 5 (^) |
|---|---|---|---|---|---|
| **1st STEP** | | | | | |
| IR | 50.0 | 50.0 | 50.0 | 50.0 | 50.0 |
| BR | 50.0 | 50.0 | 50.0 | 50.0 | 50.0 |
| N550 | 50.0 | 50.0 | 50.0 | 50.0 | 50.0 |
| Stearic Acid | 2.0 | 2.0 | 2.0 | 2.0 | 2.0 |
| Zinc Oxide | 3.0 | 3.0 | 3.0 | 3.0 | 3.0 |
| Antioxidant | 2.0 | 2.0 | 2.0 | 2.0 | 2.0 |
| **2nd STEP** | | | | | |
| Sulfur | 2.0 | 2.0 | 2.0 | 2.0 | 2.0 |
| TBBS | 2.75 | 2.50 | 2.5 | 2.5 | 2.5 |
| DCDA | - | 1.19 | - | - | - |
| BCDA | - | - | 1.19 | 1.49 | 1.74 |
| (*): comparison.<br>(^): invention | | | | | |

IR: cis-1,4-polyisoprene (SKI - Nizhnekamskneftechim Export);
BR: high cis-polybutadiene (Europrene Neocis® 60 - Enichem Elastomers);
N550: Carbon black (Cabot);
Antioxidant: phenyl-p-phenylenediamine (6-PPD - Akzo Nobel);
TBBS: N-tert-butyl-2-benzothiazylsulfenamide (Vulkacit® NZ/EGC Lanxess);
DCDA: 1,12-diazidododecane;
BCDA: 2,6-bis(4-azidobenzylidene)-4-methylcyclohexanone - Sigma- Aldrich.

All the samples were evaluated as described above and the results were summarized in the following Table 2.

TABLE 2

| Results | 1 (*) | 2 (^) | 3 (^) | 4 (^) | 5 (^) |
|---|---|---|---|---|---|
| STATIC MECHANICAL PROPERTIES | | | | | |
| Tensile modulus 100% [MPa] | 3.07 | 1.33 | 1.91 | 2.20 | 2.21 |
| Tensile modulus 300% [MPa] | - | 7.01 | 9.85 | 10.99 | 11.09 |
| Stress at break [MPa] | 9.21 | 12.89 | 15.04 | 18.43 | 14.00 |
| Elongation at break [%] | 247.7 | 509.3 | 462.4 | 522.3 | 400.1 |
| Energy [J/cm$^3$] | 9.71 | 27.40 | 30.66 | 44.21 | 24.65 |

(continued)

| DYNAMIC MECHANICAL PROPERTIES | | | | | |
|---|---|---|---|---|---|
| E' (23°C) | 6.33 | 4.74 | 5.44 | 5.69 | 5.83 |
| E' (70°C) | 6.23 | 4.12 | 4.90 | 5.05 | 5.17 |
| Tan delta (23°C) | 0.087 | 0.148 | 0.125 | 0.116 | 0.115 |
| Tan delta (70°C) | 0.067 | 0.134 | 0.114 | 0.102 | 0.100 |
| MDR RHEOMETRIC ANALYSIS (10 min, 170°C) | | | | | |
| ML (dNm) | 2.08 | 1.95 | 2.58 | 2.40 | 2.35 |
| MH (dNm) | 25.26 | 11.91 | 14.76 | 16.65 | 16.53 |
| $M_{final}$ (dNm) | 21.13 | 11.88 | 14.45 | 16.04 | 16.05 |
| TS1 (min) | 0.95 | 1.88 | 1.25 | 0.83 | 0.80 |
| TS2 (min) | 1.13 | 2.47 | 1.92 | 1.19 | 1.16 |
| T90 (min) | 2.39 | 5.92 | 6.76 | 5.19 | 5.32 |
| Reversion (%) | 17.8 | 0.30 | 2.54 | 4.28 | 3.38 |
| G' (3.2%) (MPa) | 1.53 | 1.08 | 1.28 | 1.36 | 1.36 |
| ΔG' (3.2-10) (MPa) | 0.15 | 0.09 | 0.12 | 0.15 | 0.16 |
| (*): comparison.<br>(^): invention | | | | | |

The data reported in Table 2 clearly show a reduction of the reversion phenomena when using the diazide crosslinking agent according to the present invention. On the other hand, the static and mechanical properties are not impaired by the use of diazide crosslinking agent according to the present invention and the corresponding reduction of crosslinking accelerator (TBBS). Moreover, the values of stress at break, elongation at break and energy are even improved, so demonstrating the good crosslinking results obtained by the use of diazide crosslinking agent according to the present invention and the corresponding reduction of crosslinking accelerator (TBBS).

EXAMPLE 2

Preparation of elastomeric compositions 6 to 10

The elastomeric compositions 6 to 10 given in Table 3 were prepared as follows (the amounts of the various components are given in phr).

All the components, except sulfur, diazide and accelerators (TBBS), were mixed together in an internal mixer (model Pomini PL 1.6) for about 5 min (1st Step). As soon as the temperature reached 145±5°C, the elastomeric composition was discharged. The sulfur, diazide and accelerators (TBBS), were then added and mixing was carried out in an internal mixer (model Thermo Haake Rheomix 3000p) for about 5 minutes at a maximum temperature of 100°C (2nd Step).

TABLE 3

| SAMPLE | 6 (*) | 7 (^) | 8 (^) | 9 (^) | 10 (^) |
|---|---|---|---|---|---|
| **1st STEP** | | | | | |
| S-SBR | 137.5 | 137.5 | 137.5 | 137.5 | 137.5 |
| N375 | 60.0 | 60.0 | 60.0 | 60.0 | 60.0 |
| Stearic Acid | 2.0 | 2.0 | 2.0 | 2.0 | 2.0 |
| Zinc Oxide | 3.0 | 3.0 | 3.0 | 3.0 | 3.0 |

(continued)

| 2nd STEP | | | | | |
|---|---|---|---|---|---|
| Sulfur | 1.75 | 0.80 | 0.80 | 0.80 | 0.80 |
| TBBS | 1.8 | 1.8 | 1.8 | 1.8 | 1.8 |
| DCDA | - | 0.79 | - | - | - |
| BCDA | - | - | 0.79 | 0.99 | 1.16 |
| (*): comparison<br>(^): invention | | | | | |

S-SBR: solution-prepared styrene/1,3-butadiene copolymer having a styrene content of 25% by weight and a vinyl content of 50% by weight with respect to the total copolymer weight, and containing 37.5 phr of aromatic oil (Buna VSL 5025-1 - Lanxess);
N375: Carbon black - (Cabot);
TBBS: N-tert-butyl-2-benzothiazylsulfenamide (Vulkacit® NZ/EGC - Lanxess);
DCDA: 1,12-diazidododecane;
BCDA: 2,6-bis(4-azidobenzylideney4-methylcyclohexanone- Sigma- Aldrich.

All the samples were evaluated as described above and the results were summarized in the following Table 4.

TABLE 4

| Results | 6 (*) | 7 (^) | 8 (^) | 9 (^) | 10 (^) |
|---|---|---|---|---|---|
| STATIC MECHANICAL PROPERTIES | | | | | |
| Tensile modulus 100% [MPa] | 2.08 | 1.84 | 1.87 | 1.97 | 2.03 |
| Tensile modulus 300% [MPa] | 12.07 | 10.13 | 9.35 | 11.32 | 11.74 |
| Stress at break [MPa] | 14.12 | 15.48 | 15.51 | 12.88 | 13.87 |
| Elongation at break [%] | 355.8 | 420.9 | 445.2 | 346.4 | 355.1 |
| Energy [J/cm$^3$] | 19.29 | 24.47 | 26.72 | 16.32 | 18.11 |
| DYNAMIC MECHANICAL PROPERTIES | | | | | |
| E' (23°C) | 9.24 | 9.22 | 9.81 | 9.61 | 9.53 |
| E' (70°C) | 5.25 | 5.28 | 5.72 | 5.42 | 5.39 |
| Tan delta (23°C) | 0.396 | 0.384 | 0.415 | 0.406 | 0.410 |
| Tan delta (70°C) | 0.148 | 0.158 | 0.146 | 0.149 | 0.151 |
| MDR RHEOMETRIC ANALYSIS (10 min, 170°C) | | | | | |
| ML (dNm) | 2.04 | 1.92 | 2.27 | 2.02 | 2.04 |
| MH (dNm) | 14.18 | 11.63 | 11.00 | 10.18 | 9.93 |
| TS1 (min) | 2.90 | 2.53 | 1.70 | 1.51 | 1.48 |
| TS2 (min) | 4.25 | 3.70 | 3.67 | 3.39 | 3.42 |
| T90 (min) | 13.38 | 12.94 | 12.95 | 11.64 | 11.89 |
| G' (3.2%) (MPa) | 1.45 | 1.42 | 1.48 | 1.39 | 1.38 |

(continued)

| MDR RHEOMETRIC ANALYSIS (10 min, 170°C) | | | | | |
|---|---|---|---|---|---|
| ΔG'(3.2-10) (MPa) | 0.17 | 0.17 | 0.18 | 0.17 | 0.15 |
| (*): comparison<br>(^): invention | | | | | |

The data of Table 4 show that the static and mechanical properties are not impaired by the use of diazide crosslinking agent according to the present invention, in spite of the reduction of sulfur crosslinking agent.

## Claims

**1.** A tire comprising at least one structural element including a crosslinked elastomeric material obtained by crosslinking a crosslinkable elastomeric composition comprising:

(a) 100 phr of at least one elastomeric polymer,
(b) from 0.1 phr to 120 phr of at least one reinforcing filler;
(c) from 0.05 phr to 10 phr of at least one crosslinking agent selected from the group comprising diazides having the following general formula (I):

$$N_3\text{-}A\text{-}R\text{-}B\text{-}N_3 \qquad (I)$$

wherein

- A and B, which may be equal or different from each other, are selected from the group comprising: a substituted or unsubstituted methylene group, a substituted or unsubstituted benzyl group, or a substituted or unsubstituted benzylidene group;
- R may be a linear, branched, or cyclic alkylene group comprising from 1 to 20 carbon atoms, said alkylene group optionally comprising one or more heteroatoms selected from S, N, or O.

**2.** Tire according to claim 1, said tire comprising .

- a carcass structure of a substantially toroidal shape, having opposite lateral edges associated with respective right-hand and left-hand bead structures;
- a belt structure applied in a radially external position with respect to said carcass structure;
- a tread band applied in a radially external position with respect to said belt structure;
- a tread underlayer applied in a radially internal position with respect to said tread band;
- a pair of sidewalls applied laterally on opposite sides with respect to said carcass structure;

wherein said structural element is said tread underlayer.

**3.** Tire according to claim 2, wherein said bead structures are defined by respective carcass turn-up and comprise at least one bead core and at least one bead filler, said bead filler being said structural element.

**4.** Tire according to claim 2 or 3, wherein said tire further comprises a pair of sidewall inserts extending radially between each of said bead structures and the corresponding lateral edge of said tread band, wherein said structural element is at least one of said pair of sidewall inserts.

**5.** Tire according to any one of claims 2 to 4, wherein said tire further comprises a pair of antiabrasive layers placed in an axially external position with respect to said carcass turn-up, wherein said structural element is at least one of said pair of antiabrasive layers.

**6.** Tire according to any one of the preceding claims, wherein said R is a linear, branched or cyclic alkylene group comprising from 1 to 10 carbon atoms.

**7.** Tire according to any one of the preceding claims, wherein said linear alkylene group is selected from the group comprising:

$-CH_2-CH_2-;$

$-CH_2-CH_2-CH_2-;$

$-CH_2-CH_2-CH_2-CH_2-;$

$-CH_2-CH_2-CH_2-CH_2-CH_2--,$

$-CH_2-CH_2-CH_2-CH_2-CH_2-CH_2-;$

$-CH_{2-}CH_2-CH_2-CH_2-CH_2-CH_2-;$

$-CH_2-CH_2-O-;$

=CH-C H=;

$=CH-CH_2-CH=;$

$=CH-CH_2-CH_2-CH=;$

$-CH_2-CH_2-O-CH_2-CH_2-;$

$-CH_2-CH_2-S-CH_{2-}CH_2-;$

$-CH_2-CH_2-NH-CH_2-CH_2-:$

$=CH-CH_2-CH_2-CH_2-CH=;$

$=CH-CH_2-CH_2-CH_2-CH_2-CH=.$

**8.** Tire according to any one of the preceding claims, wherein said branched alkylene group is selected from the group comprising:

$-(CH_3)_2C=;$

$-CH_3(C_2H_5)C=;$

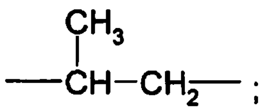

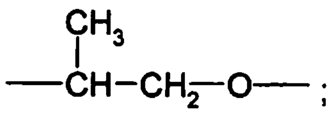

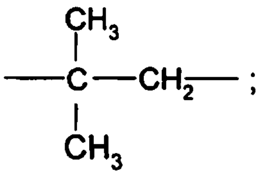

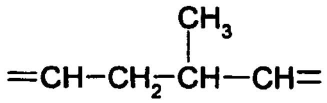

;

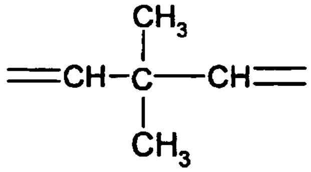

;

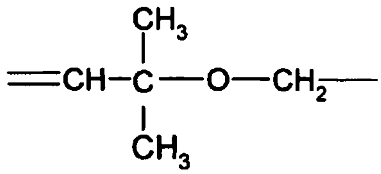

;

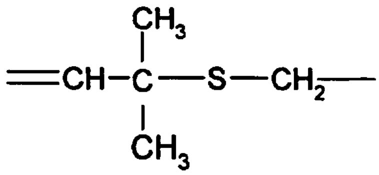

;

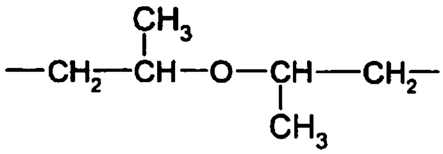

;

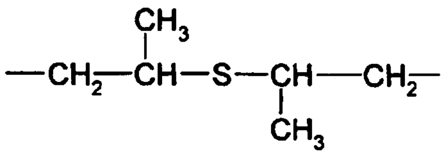

;

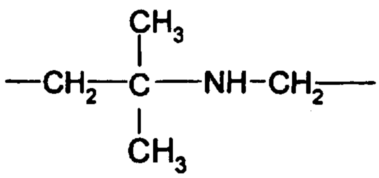

;

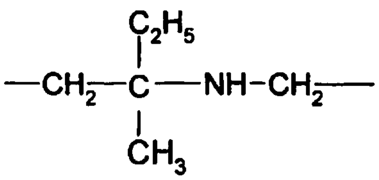

.

**9.** Tire according to any one of the preceding claims, wherein said cyclic alkylene group is selected from the group comprising:

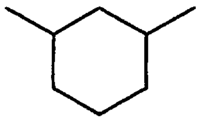 ;

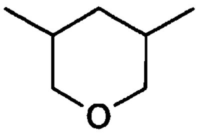 ;

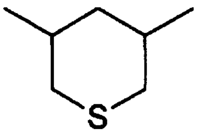 ;

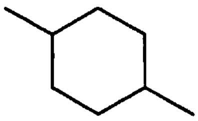 ;

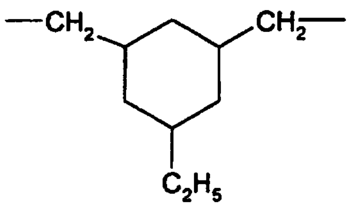 ;

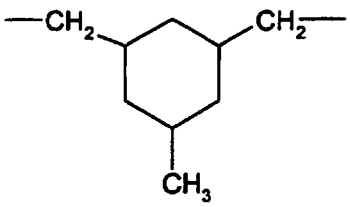 ;

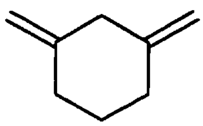 ;

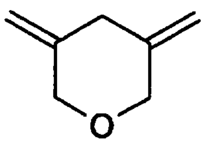 ;

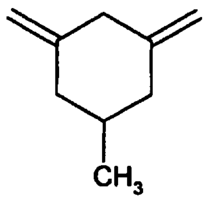 ;

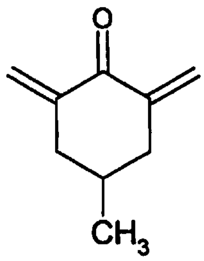 ;

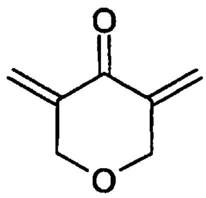 ;

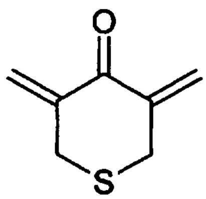 .

10. Tire according to any one of the preceding claims, wherein said at least one diazide crosslinking agent is selected from the group comprising: 1,12-diazidododecane, 1,16-diazidohexadecane, 1,18-diazidooctadecane, 1,3-bis(4-butylazide)cyclohexane, 1,4-bis(3-propylazide)cyclohexane, 2,6-bis(4-azidobenzylidene)-4-methylcyclohexanone, 2,6-bis(4-azidobenzylidene)-4-cyclohexanone, 1,4-bis(4-azidobenzylidene)cyclohexane, or mixtures thereof.

11. Tire according to claim 10, wherein said at least one diazide crosslinking agent is selected from 1,12-diazidododecane, 2,6-bis(4-azidobenzylidene)-4-methylcyclohexanone, or mixtures thereof.

12. Tire according to any one of the preceding claims, wherein said at least one diazide crosslinking agent is employed in the crosslinkable elastomeric composition in an amount of from 0.1 phr to 5 phr.

13. Tire according to any one of the preceding claims, wherein said crosslinkable elastomeric composition further comprises a sulfur or derivatives thereof.

14. Tire according to claim 13, wherein said sulfur or derivatives thereof is employed in the crosslinkable elastomeric composition in an amount of from 0.05 phr to 10 phr.

15. Tire according to claim 14, wherein said sulfur or derivatives thereof employed in the crosslinkable elastomeric composition in an amount of from 0.1 phr to 5 phr.

16. Tire according to any one of the preceding claims, wherein said crosslinkable elastomeric composition further comprises at least one activator.

**17.** Tire according to claim 16, wherein said at least one activator is selected from the group comprising zinc compounds such as ZnO, $ZnCO_3$, zinc salts of saturated or unsaturated fatty acids containing from 8 to 18 carbon atoms, and also BiO, PbO, $Pb_3O_4$ $PbO_2$, or mixtures thereof.

**18.** Tire according to claim 16 or 17, wherein said at least one activator is employed in the crosslinkable elastomeric composition in an amount of from 0.5 phr to 10 phr.

**19.** Tire according to claim 18, wherein said at least one activator is employed in the crosslinkable elastomeric composition in an amount of from 1 phr to 5 phr.

**20.** Tire according to any one of the preceding claims, wherein said crosslinkable elastomeric composition further comprises at least one accelerator.

**21.** Tire according to claim 20, wherein said at least one accelerator is selected from the group comprising dithiocarbamates, guanidine, thiourea, thiazoles, sulfenamides, thiurams, amines, xanthates, or mixtures thereof.

**22.** Tire according to claim 20 or 21, wherein said at least one accelerator is employed in the crosslinkable elastomeric composition in an amount of from 0.05 phr to 10 phr.

**23.** Tire according to claim 22, wherein said at least one accelerator is employed in the crosslinkable elastomeric composition in an amount of from 0.1 phr to 5 phr.

**Patentansprüche**

**1.** Reifen, der mindestens ein strukturelles Element umfasst, das ein quervernetztes elastomeres Material beinhaltet, das durch Quervernetzen einer vernetzbaren elastomeren Zusammensetzung erhalten wird, die folgendes umfasst:

(a) 100 phr mindestens eines elastomeren Polymers,
(b) 0,1 phr bis 120 phr mindestens eines verstärkenden Füllstoffes;
(c) 0,05 phr bis 10 phr mindestens eines Quervernetzungsmittels, das aus der Gruppe ausgewählt ist, die Diazide mit der folgenden allgemeinen Formel (I) umfasst:

$$N_3\text{-}A\text{-}R\text{-}B\text{-}N_3 \qquad (I)$$

worin

- A und B, die gleich oder unterschiedlich sein können, aus der Gruppe ausgewählt sind, die eine substituierte oder unsubstituierte Methylengruppe, eine substituierte oder unsubstituierte Benzylgruppe oder eine substituierte oder unsubstituierte Benzylidengruppe umfasst;
- R eine lineare, verzweigte oder cyclische Alkylengruppe sein kann, die 1 bis 20 Kohlenstoffatome umfasst und optional ein oder mehrere Heteroatome umfasst, die aus S, N oder O ausgewählt sind.

**2.** Reifen gemäß Anspruch 1, umfassend:

- eine Karkassen-Struktur von im wesentlichen toroidaler Form, die einander gegenüberliegende Seitenkanten aufweist, die mit entsprechenden rechten und linken Wulststrukturen assoziiert sind;
- eine Gürtelstruktur, die in Bezug auf die Karkassen-Struktur in einer radialen außenliegenden Position angebracht ist;
- ein Laufflächenband, das in Bezug auf die Gürtelstruktur in einer radialen außenliegenden Position angebracht ist;
- eine Laufflächen-Unterschicht, die in Bezug auf das Laufflächenband in einer radialen innenliegenden Position angebracht ist;
- ein Paar Seitenwände, die in Bezug auf die Karkassen-Struktur lateral auf gegenüberliegenden Seiten angebracht sind;

worin das genannte Strukturelement die Laufflächen-Unterschicht ist.

**3.** Reifen gemäß Anspruch 2, worin die Wulststrukturen durch entsprechende Karkassen-Umschlagungen definiert sind und mindestens einen Wulstkern und mindestens einen Wulstfüller umfassen, wobei der Wulstfüller das genannte Strukturelement ist.

**4.** Reifen gemäß Anspruch 2 oder 3, worin der Reifen weiterhin ein Paar Seitenwand-Einlageelemente umfasst, die sich radial zwischen jeder der Wulststrukturen und der entsprechenden Seitenkante des Laufflächenbandes erstrecken, worin das genannte Strukturelement mindestens eines des Paars Seitenwand-Einlageelemente ist.

**5.** Reifen gemäß mindestens einem der Ansprüche 2 bis 4, worin der Reifen weiterhin ein Paar Antiabriebschichten umfasst, die in Bezug auf die Karkassen-Umstülpung in einer axialen außenliegenden Stellung platziert sind, worin das genannte Strukturelement mindestens eines des Paars Antiabriebschichten ist.

**6.** Reifen gemäß mindestens einem der vorhergehenden Ansprüche, worin R eine lineare, verzweigte oder cyclische Alkylengruppe ist, die 1 bis 10 Kohlenstoffatome umfasst.

**7.** Reifen gemäß mindestens einem der vorhergehenden Ansprüche, worin die lineare Alkylengruppe aus der Gruppe ausgewählt ist, die folgendes umfasst:

$-CH_2-CH_2-$;

$-CH_2-CH_2-CH_2-$;

$-CH_2-CH_2-CH_2-CH_2-$;

$-CH_2-CH_2-CH_2-CH_2-CH_2-$;

$-CH_2-CH_2-CH_2-CH_2-CH_2-CH_2-$;

$-CH_2-CH_2-O-$;

$=CH-CH=$;

$=CH-CH_2-CH=$;

$=CH-CH_2-CH_2-CH=$;

$-CH_2-CH_2-O-CH_2-CH_2-$;

$-CH_2-CH_2-S-CH_2-CH_2-$;

$-CH_2-CH_2-NH-CH_2-CH_2-$;

$=CH-CH_2-CH_2-CH_2-CH=$;

$=CH-CH_2-CH_2-CH_2-CH_2-CH=$.

**8.** Reifen gemäß mindestens einem der vorhergehenden Ansprüche, worin die verzweigte Alkylengruppe aus der Gruppe ausgewählt ist, die folgendes umfasst:

$-(CH_2)_2C=$;

$-CH_3(C_2H_5)C=$;

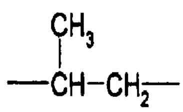 ;

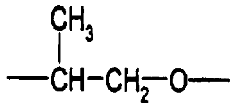 ;

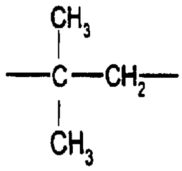 ;

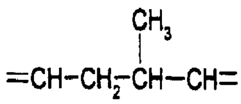 ;

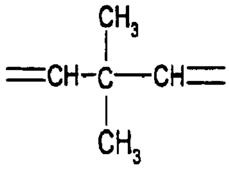 ;

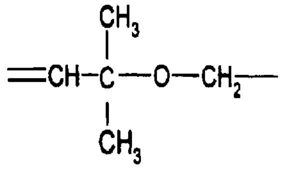 ;

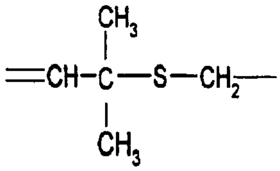 ;

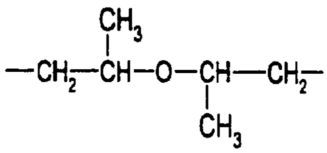 ;

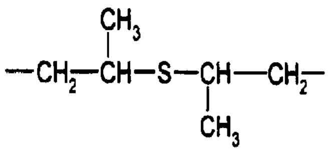 ;

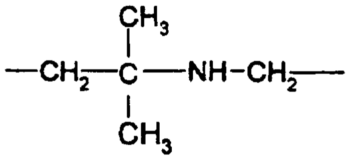 ;

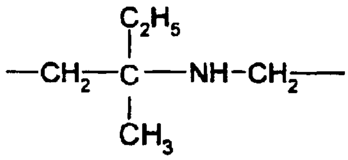 .

**9.** Reifen gemäß mindestens einem der vorhergehenden Ansprüche, worin die cyclische Alkylengruppe aus der Gruppe ausgewählt ist, die folgendes umfasst:

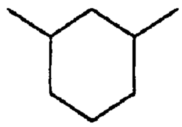 ;

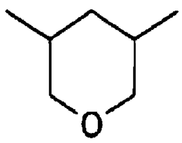 ;

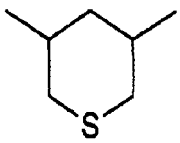 ;

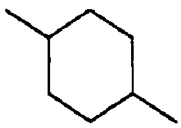 ;

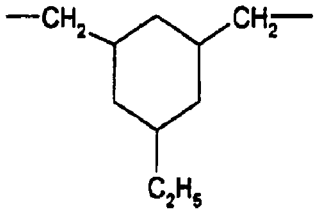 ;

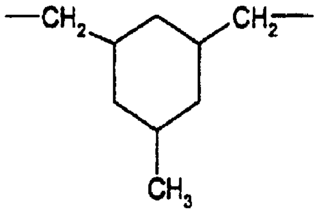 ;

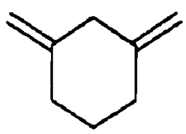 ;

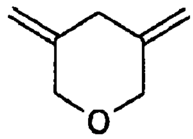 ;

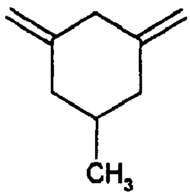 ;

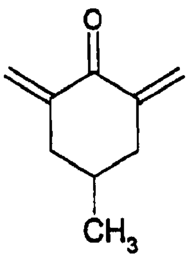 ;

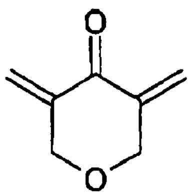 ;

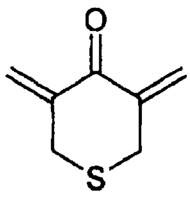 .

**10.** Reifen gemäß mindestens einem der vorhergehenden Ansprüche, worin das mindestens eine Diazid-Quervernetzungsmittel aus der Gruppe ausgewählt ist, die folgendes umfasst: 1,12-Diazidododecan, 1,16-Diazidohexadecan, 1,18-Diazidooctadecan, 1,3-Bis(4-butylazid)cyclohexan, 1,4-Bis(3-propylazid)cyclohexan, 2,6-Bis(4-azidobenzyliden)-4-methylcyclohexanon, 2,6-Bis(4-azidobenzyliden)-4-cyclohexanon, 1,4-Bis(4-azidobenzyliden)cyclohexan oder Mischungen davon ausgewählt ist.

**11.** Reifen gemäß Anspruch 10, worin das mindestens eine Diazid-Quervernetzungsmittel aus 1,12-Diazidododecan, 2,6-Bis(4-azidobenzyliden)-4-methylcyclohexanon oder Mischungen davon ausgewählt ist.

**12.** Reifen gemäß mindestens einem der vorhergehenden Ansprüche, worin das mindestens eine Diazid-Quervernetzungsmittel in der quervernetzbaren elastomeren Zusammensetzung in einer Menge von 0,1 phr bis 5 phr eingesetzt wird.

**13.** Reifen gemäß mindestens einem der vorhergehenden Ansprüche, worin die quervernetzbare Elastomerzusammensetzung weiterhin Schwefel oder Derivate davon umfasst.

**14.** Reifen gemäß Anspruch 13, worin der Schwefel oder die Derivate davon in der quervernetzbaren Elastomerzusammensetzung in einer Menge von 0,05 bis 10 phr eingesetzt werden.

**15.** Reifen gemäß Anspruch 14, worin der Schwefel oder die Derivate in der quervernetzbaren Elastomerzusammensetzung in einer Menge von 0,1 bis 5 phr eingesetzt werden.

**16.** Reifen gemäß mindestens einem der vorhergehenden Ansprüche, worin die quervernetzbare Elastomerzusammensetzung weiterhin mindestens einen Aktivator umfasst.

**17.** Reifen gemäß Anspruch 16, worin der mindestens eine Aktivator aus der Gruppe ausgewählt ist, die Zinkverbindungen, wie ZnO, $ZnCO_3$, Zinksalze gesättigter oder ungesättigter Fettsäuren mit 8 bis 18 Kohlenstoffatomen, und auch BiO, PbO, $Pb_3O_4$, $PbO_2$ oder Mischungen davon umfasst.

**18.** Reifen gemäß Anspruch 16 oder 17, worin der mindestens eine Aktivator in der quervernetzbaren Elastomerzusammensetzung in einer Menge von 0,5 phr bis 10 phr eingesetzt wird.

**19.** Reifen gemäß Anspruch 18, worin der mindestens eine Aktivator in der quervernetzbaren Elastomerzusammensetzung in einer Menge von 1 phr bis 5 phr eingesetzt wird.

**20.** Reifen gemäß mindestens einem der vorhergehenden Ansprüche, worin die quervernetzbare Elastomerzusammensetzung weiterhin mindestens einen Beschleuniger umfasst.

**21.** Reifen gemäß Anspruch 20, worin der mindestens eine Beschleuniger aus der Gruppe ausgewählt ist, die Dithiocarbamate, Guanidin, Thioharnstoff, Thiazole, Sulfenamide, Thiurame, Amine, Xanthate oder Mischungen davon umfasst.

**22.** Reifen gemäß Anspruch 20 oder 21, worin der mindestens eine Beschleuniger in der quervernetzbaren Elastomerzusammensetzung in einer Menge von 0,05 phr bis 10 phr eingesetzt wird.

**23.** Reifen gemäß Anspruch 22, worin der mindestens eine Beschleuniger in der quervernetzbaren Elastomerzusammensetzung in einer Menge von 0,1 phr bis 5 phr eingesetzt wird.

## Revendications

**1.** Pneu comprenant au moins un élément de structure comprenant un matériau élastomère réticulé obtenu par réticulation d'une composition élastomère réticulable comprenant

(a) 100 phr d'au moins un polymère élastomère,
(B) de 0,1 phr à 120 phr d'au moins une charge de renfort;
(C) de 0,05 phr à 10 phr d'au moins un agent de réticulation choisi dans le groupe comprenant des diazides ayant la formule générale (I) suivante :

$$N_3\text{-}A\text{-}R\text{-}B\text{-}N_3 \qquad (I)$$

dans laquelle:

- A et B, qui peuvent être identiques ou différents l'un de l'autre, sont choisis dans le groupe comprenant : un groupe méthylène substitué ou non substitué, un groupe benzyle substitué ou non substitué, ou un groupe benxylidene substitué ou non substitué;
- R peut être un groupe alkylène linéaire, ramifié oui cyclique comprenant de 1 à 20 atomes de carbone, ledit groupe alkyléne comprenant éventuellement un ou plusieurs hétéroatomes choisis parmi S, N, ou O.

**2.** Pneu selon la revendication 1, ledit pneu comprenant :

- une structure de carcasse de forme sensiblement toroïdale, ayant des bords latéraux opposes associés avec des structures de talon respectivement à droite et à gauche;
- une structure de ceinture appliquée dans une position radialement externe par rapport à ladite structure de carcasse;
- une bande de roulement appliquée dans une position radialement externe par rapport à ladite structure de ceinture;
- une sous-couche de roulement appliquée dans une position radialement interne par rapport à ladite bande de roulement;
- une paire de parois latérales appliquées latéralement sur des côtés opposés par rapport à ladite structure de carcasse ;

dans lequel le ledit élément de structure est ladite sous-couche de roulement.

**3.** Pneu selon la revendication 2, dans lequel lesdites structures de talon sont définies par un retour de carcasse respectif et comprennent; au moins une tringle et au moins un bourrage de talon, ledit bourrage de talon étant ledit élément de structure.

**4.** Pneu selon la revendication 2 ou 3, dans lequel ledit pneu comprend en outre une paire d'inserts de paroi latérale s'étendant radialement entre chacune desdites structures de talon et le bord latéral correspondant de ladite bande de roulement, dans lequel ledit élément de structure est au moins l'un de ladite paire d'inserts de paroi latérale,

**5.** Pneu selon l'une quelconque des revendications 2 à 4, dans lequel ledit pneu comprend en outre une paire de couches anti-abrasion placée dans une position axialement externe par rapport, audit retour de carcasse, dans lequel ledit élément de structure est au moins l'un de ladite paire de couches anti-abrasion.

**6.** Pneu selon l'une des revendications précédentes, dans lequel ledit R est un groupe alkylène linéaire, ramifié ou cyclique comprenant de 1 à 10 atomes de carbone.

**7.** Pneu selon l'une quelconque des revendications précédentes, dans lequel ledit groupe alkylène linéaire est sélectionné dans le groupe comprenant :

$-CH_2-CH_2-$;

$-CH_2-CH_2-CH_2-$;

$-CH_2-CH_2-CH_2-CH_2-$;

$-CH_2-CH_2-CH_2-CH_2-CH_2-$;

$-CH_2-CH_2-CH_2-CH_2-CH_2-CH_2-$;

$-CH_2-CH_2-O-$:

$=CH-CH=$;

$=CH-CH_2-CH=$;

$=CH-CH_2-CH_2-CH=$;

$-CH_{2-}CH_2-O-CH_2-CH_2-$;

$-CH_2-CH_3-S-CH_2-CH_2-$;

$-CH_{2-}CH_2-NH-CH_{2-}CH_2-$;

$=CH-CH_2-CH_2-CH_2-CH=$ ;

$-CH-CH_2-CH_2-CH_2-CH_2-CH=$.

**8.** Pneu selon l'une quelconque des revendications précédentes, dans lequel ledit groupe alkylène ramifié est choisi dans le groupe comprenant :

$-(Ch_3)_2C=$;

$-CH_3(C_2H_5)C=$;

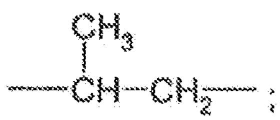

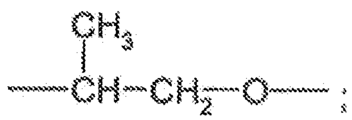

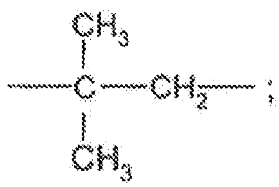

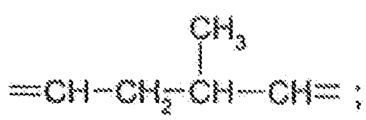

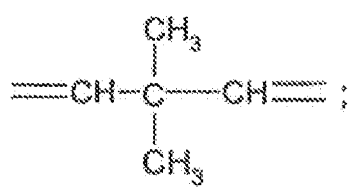

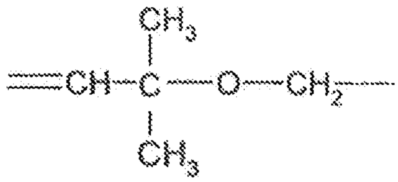 ;

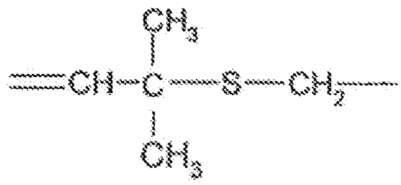 ;

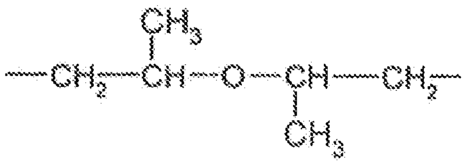 ;

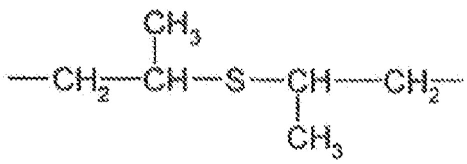 ;

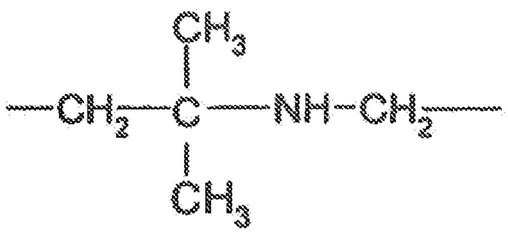 ;

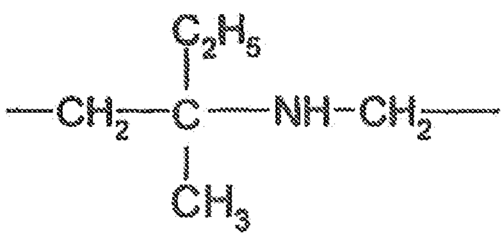 .

**9.** Pneu selon l'une quelconque des revendications précédentes, dans lequel ledit groupe alkylène cyclique est sélectionné dans le groupe comprenant:

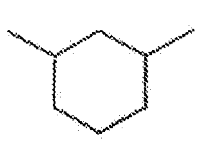 ;

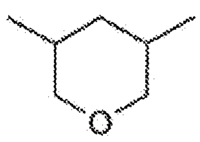
;

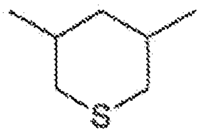
;

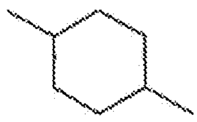
;

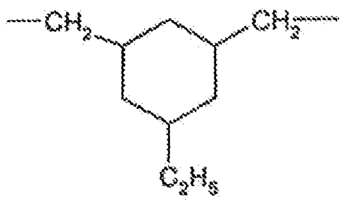
;

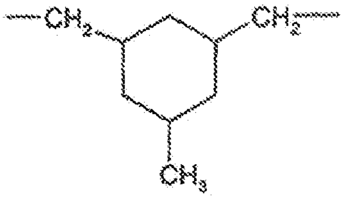
;

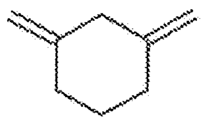
;

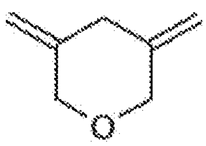
;

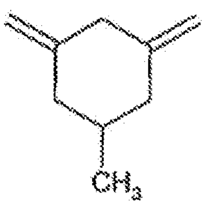
;

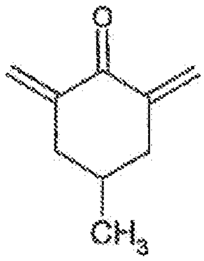
;

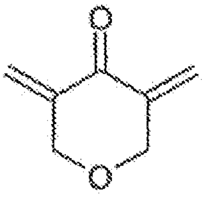
;

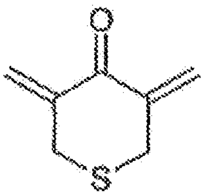
.

**10.** Pneu selon l'une quelconque des revendications précédentes, dans lequel ledit au moins un agent de réticulation diazide est choisi dans le groupe comportant: 1,12-diazidododécane, 1,16-diazidohexadecane, 1,18-diazidooctadécane, 1,3-bis(4-butylazide)cyclohexane, 1,4-bis(3-propylazide)cyclohexane, 2,6-bis(4-azidobenzylidène)-4-méthylcyclohexanone, 2,6-bis(4-azidobenzylidène)-4-cyclohexanone, 1,4-bis(4-azidobenzylidéne)cyclohexine, ou leurs mélanges.

**11.** Pneu selon la revendication 10, dans lequel ledit au moins un agent de réticulation diazide est choisi parmi 1,12-diazidododécane, 2,6-bis(4-azidobenzylidène)-4-méthylcyclohexanone, ou leurs mélanges.

**12.** Pneu selon l'une quelconque des revendications précédentes, dans lequel ledit au moins un agent de réticulation diazide est utilisé dans la composition elastomére réticulable dans une quantité allant de 0,1 phr à 5 phr,

**13.** Pneu selon l'une quelconque des revendications précédentes, dans lequel ladite composition élastomère réticulable comprend en outre du soufre ou ses dérives.

**14.** Pneu selon la revendication 13, dans lequel ledit soufre ou ses dérivés est utilisé dans la composition élastomère réticulable en dans une quantité allant de 0,05 phr à 10 phr.

**15.** Pneu selon la revendication 14, dans lequel ledit soufre ou ses dérivés utilisé dans la composition élastomère réticulable est dans une quantité allant de 0,1 phr à 5 phr.

**16.** Pneu selon l'une quelconque des revendications précédentes, dans lequel ladite composition élastomère réticulable comprend en outre au moins un activateur.

**17.** Pneu selon la revendication 16, dans lequel ledit au moins un activateur est choisi dans le groupe comprenant des composés de zinc tels que ZnO, $ZnCO_3$, sels de zinc d'acides gras saturés ou insaturés contenant de 8 à 18 atomes de carbone, et aussi BiO, PbO, $Pb_3O_4$, $PbO_2$, ou leurs mélanges.

**18.** Pneu selon la revendication 16 ou 17, dans lequel ledit au moins un activateur est dans la composition élastomère réticulable dans une quantité allant de 0,5 phr à 10 phr.

**19.** Pneu selon la revendication 18, dans lequel ledit au moins un activateur est utilisé dans la composition élastomère réticulable dans une quantité allant de 1 phr à 5 phr.

**20.** Pneu selon l'une quelconque des revendications précédentes, dans lequel laclite composition élastomère réticulable comprend en outre au moins un accélérateur.

**21.** Pneu selon la revendication 20, dans lequel ledit au moins un accélérateur est choisi dans le groupe comprenant les dithiocarbamates, guanidine, thiourée, thiazoles, sulfénamides, thiurarnes, amines, xanthates, ou leurs mélanges.

**22.** Pneu selon la revendication 20 ou 21, dans lequel ledit au moins un accélérateur est utilisé dans la composition élastomère réticulable dans une quantité allant de 0,05 phr à 10 phr.

**23.** Pneu selon la revendication 22, dans lequel ledit au moins un accélérateur est dans la composition élastomère réticulable dans une quantité allant de 0,1 phr à 5 phr.

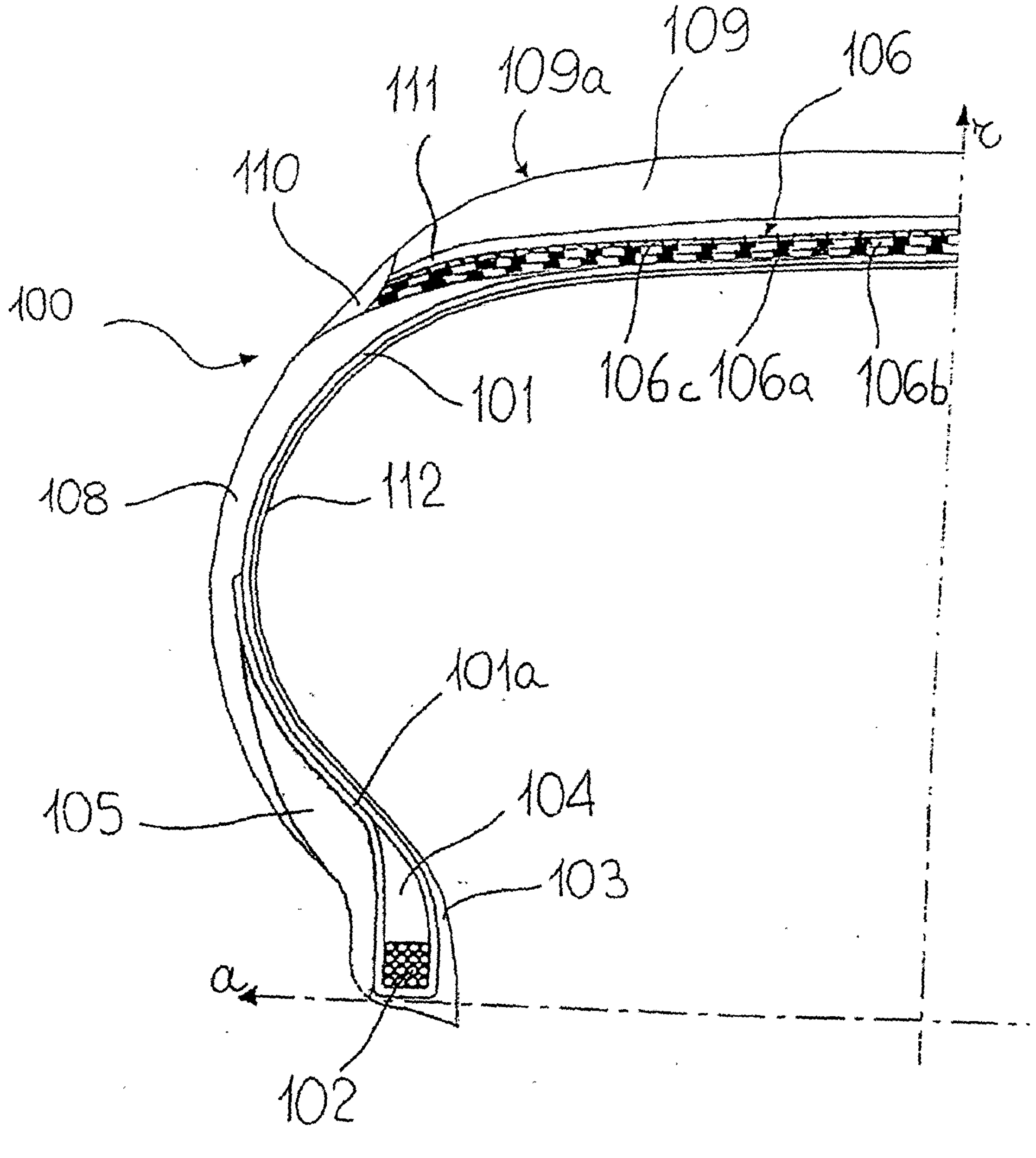
109
109a
111
106
110
100
101
106c
106a
106b
108
112
101a
105
104
103
a
r
102

FIG. 1

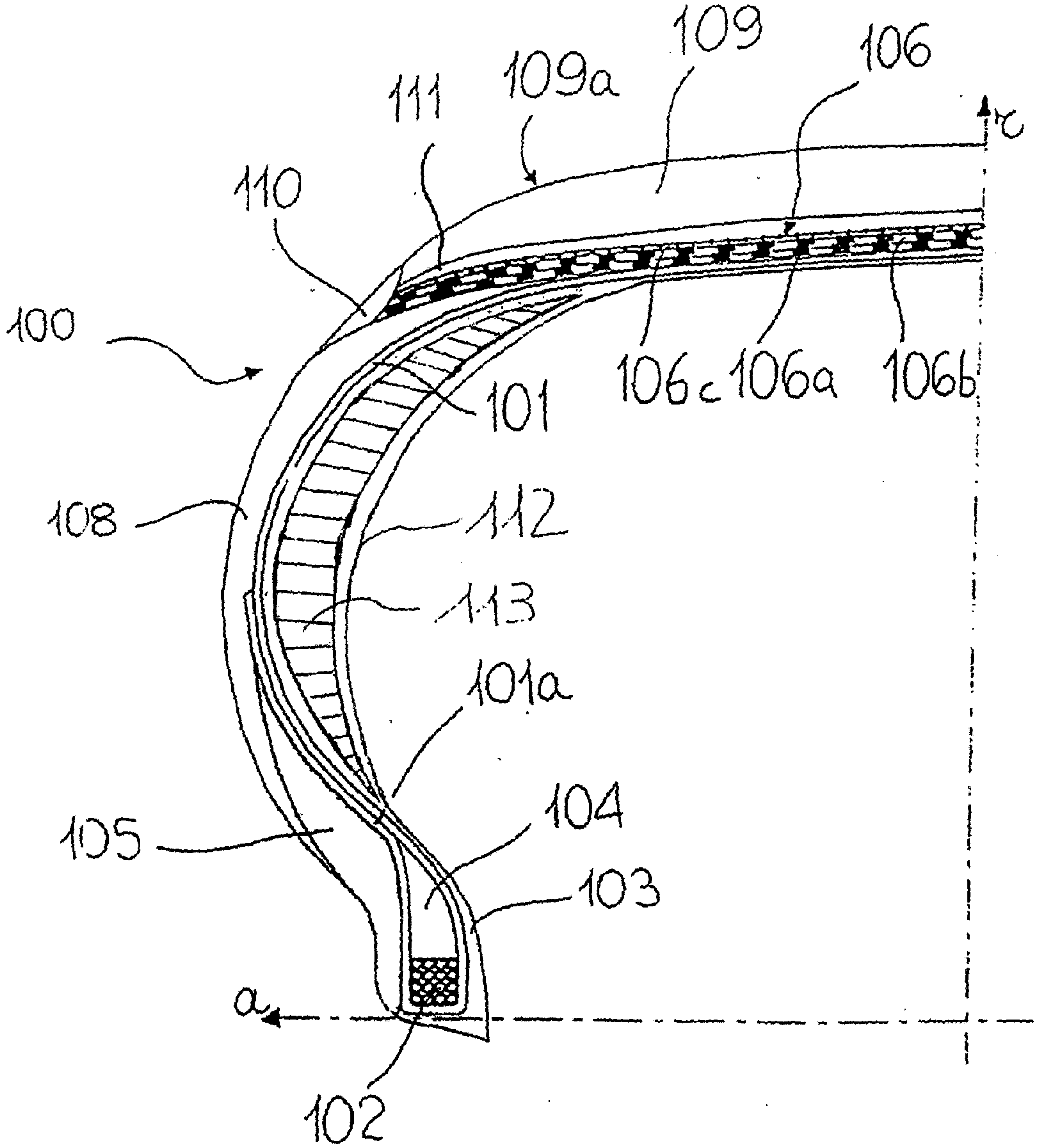
109
109a
106
111
r
110
100
106c
106a
106b
101
108
112
113
101a
104
105
103
a
102

FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3261818 A
- GB 1009771 A
- DE 2165198
- EP 451604 A
- US 4742124 A
- US 4550142 A
- EP 928680 A
- EP 928702 A
- US 5238040 A
- EP 943466 A


### Non-patent literature cited in the description


- Azides and Nitrenes. **D.S. Breslow.** Industrial Applications, II. Rubber Vulcanization. Academic Press Inc, 1984, 499-501
- **J.L. de Benito-Gonzalez et al.** The Use of Benzene 1,3-Sulphonyl Azide as an Elastomer Crosslinking Agent. *Part 1. Dienic Elastomers, Kautschuk + Gummi, Kunstsoffe 43, Jahrgang, Nr. 2/90,* 1990, 146-149